# EUROPEAN PATENT APPLICATION

(11) **EP 4 826 768 A1**
(43) Date of publication of application: **21.10.2026**
(21) Application number: 26165958.5
(22) Date of filing: 19.03.2026
(51) Int. Cl.: H01M 4/04, H01M 4/66, H01M 4/133, H01M 4/583, H01M 4/587, H01M 4/1393, H01M 50/46, H01M 4/02

(54) **SECONDARY BATTERY AND METHOD OF MANUFACTURING THE SAME**

(30) Priority: 14.04.2025 JP 2025066287
(71) Applicant: Toyota Jidosha Kabushiki Kaisha, Toyota-shi, Aichi-ken 471-8571 (JP)
(72) Inventor: TAKASU, Junta, Toyota-shi,, 471-8571 (JP)
(74) Representative: Kuhnen & Wacker Patent- und Rechtsanwaltsbüro PartG mbB

(57) **Abstract**

A secondary battery (1) may include a positive electrode (112) and a negative electrode (114) facing each other with a separator (116) interposed therebetween. The negative electrode may include a negative electrode current collector (122); a negative electrode composite layer (10) disposed on the negative electrode current collector and containing graphite particles (11); and an adhesive layer (12) disposed between a surface of the negative electrode composite layer and the separator. The surface of the negative electrode composite layer that faces the separator may include a first surface region (10_1) and a second surface region (10_2). An arithmetic mean roughness of the first surface region may be smaller than an arithmetic mean roughness of the second surface region.

## Description

### CROSS REFERENCE TO RELATED APPLICATION

This application claims priority to Japanese Patent Application No. 2025-066287 filed on April 14, 2025. The entire content of the priority application is incorporated herein by reference.

### TECHNICAL FIELD

The art disclosed herein relates to a secondary battery and a method of manufacturing a secondary battery.

### BACKGROUND ART

A negative electrode used in a secondary battery includes a conductive negative electrode current collector and a negative electrode composite layer located on the negative electrode current collector. The negative electrode composite layer contains graphite particles each having a layered crystalline structure. Charge-discharge function is achieved by interlayer metal ion insertion and extraction between the layers of the graphite particles. In view of this, technologies have been proposed that orient layer planes of graphite particles substantially perpendicular to a negative electrode current collector by utilizing the magnetic alignment property of the graphite particles (e.g., Japanese Patent Application Publication No. 2006-83030). The closer the orientation of layer planes of graphite particles is to being perpendicular to the negative electrode current collector, the more smoothly metal ions can be inserted into and extracted from between the layers of the graphite particles. This improves performance of the secondary battery.

### SUMMARY

A surface layer of a negative electrode composite layer is bonded to a separator via an adhesive layer. Magnetically aligning the graphite particles in the negative electrode composite layer increases angles formed between the surface planes of the graphite particles and the surface of the negative electrode current collector. Thus, the surface roughness of the surface layer of the negative electrode composite layer increases with magnetically aligned graphite particles, compared to without magnetically aligned graphite particles. This may negatively affect the bonding between the surface layer of the negative electrode composite layer and the separator.

In a first aspect of the technology disclosed herein, a secondary battery may comprise a positive electrode and a negative electrode facing each other with a separator interposed therebetween. The negative electrode may comprise a negative electrode current collector; a negative electrode composite layer disposed on the negative electrode current collector and containing graphite particles; and an adhesive layer disposed between a surface of the negative electrode composite layer and the separator. The surface of the negative electrode composite layer that faces the separator may comprise a first surface region and a second surface region. An arithmetic mean roughness of the first surface region may be smaller than an arithmetic mean roughness of the second surface region.

The second surface region has a larger arithmetic mean roughness than the first surface region, which facilitates insertion and extraction of metal ions into and from layers of the graphite particles. Further, the first surface region has a smaller arithmetic mean roughness than the second surface region, which improves the bonding with the adhesive layer. According to the configuration above, the surface of the negative electrode composite layer comprises both the first surface region and the second surface region. This improves the bonding between the surface layer of the negative electrode composite layer and the separator and also improves the performance of the secondary battery.

### BRIEF DESCRIPTION OF DRAWINGS

FIG. 1 is a perspective view of a secondary battery 1.
FIG. 2 is an exploded plan view of an electrode assembly 108.
FIG. 3 is a cross-sectional view of a negative electrode 114.
FIG. 4 is a flowchart illustrating a method of manufacturing the secondary battery 1.
FIG. 5 is an exploded cross-sectional view of a negative electrode composite layer 10 and a separator 116.
FIG. 6 is a diagram illustrating an example of a first paste preparation step.
FIG. 7 is a diagram illustrating steps S20 to S50.
FIG. 8 is a diagram illustrating steps S100 and S110.
FIG. 9 is a cross-sectional view of the negative electrode composite layer 10 after step S100.
FIG. 10 is a diagram illustrating step S105.
FIG. 11 is a diagram illustrating a hot-pressing step.
FIG. 12 is a cross-sectional view of a negative electrode according to a first comparative example.
FIG. 13 is a cross-sectional view of a negative electrode according to a second comparative example.
FIG. 14 is a diagram illustrating orientation angle of graphite particles 11.
FIG. 15 is an exploded plan view illustrating a first example according to a second embodiment.
FIG. 16 is an exploded plan view illustrating a second example according to the second embodiment.

### DETAILED DESCRIPTION

In a second aspect of the technology disclosed herein according to the first aspect above, in an XRD profile of the negative electrode composite layer, a degree of orientation may be defined as an intensity ratio obtained by dividing an intensity of a (110) plane of a graphite crystal by an intensity of a (002) plane of the graphite crystal, and the degree of orientation measured in the first surface region may be smaller than the degree of orientation measured in the second surface region.

According to the configuration above, the first surface region has a smaller surface roughness than the second surface region, which improves the bonding property of the first surface region.

In a third aspect of the technology disclosed herein according to the second aspect, the degree of orientation measured in the second surface region may be 0.03 or greater.

According to the configuration above, the second surface region is magnetically aligned, which reduces the internal resistance.

In a fourth aspect of the technology disclosed herein according to the first to third aspects, the arithmetic mean roughness of the first surface region may be 1.5 micrometers or less.

In a fifth aspect of the technology disclosed herein according to the first to fourth aspects, an orientation angle may be defined as an angle formed between a layer plane of the graphite particle having a layered structure and a surface of the negative electrode current collector, and an average orientation angle in the first surface region may be smaller than an average orientation angle in the second surface region.

According to the configuration above, the first surface region has a smaller surface roughness than the second surface region, which improves the bonding property of the first surface region.

In a sixth aspect of the technology disclosed herein according to the first to fifth aspects, the adhesive layer may be disposed between the first surface region and the separator and may not disposed between the second surface region and the separator.

According to the configuration above, migration of metal ions is facilitated in the second surface region since the adhesive layer is not disposed thereon.

In a seventh aspect of the technology disclosed herein according to the first to sixth aspects, the negative electrode current collector and the separator may each have an elongated sheet-like shape. The first surface region and the second surface region may each have a constant width and extend on the surface of the negative electrode composite layer in a longitudinal direction of the negative electrode current collector. The first surface region and the second surface region may be arranged adjacent to each other in a transverse direction perpendicular to the longitudinal direction. The adhesive layer may have a constant width and extend on a surface of the separator in the longitudinal direction. The adhesive layer may adhere at least to the first surface region.

In an eighth aspect of the technology disclosed herein according to the seventh aspect, the width of the first surface region in the transverse direction may be larger than the width of the adhesive layer in the transverse direction.

According to the configuration above, even if the adhesive layer is displaced relative to the first surface region in the transverse direction, the adhesive layer can be positioned within the first surface region.

In a ninth aspect of the technology disclosed herein according to the seventh or eighth aspect, the surface of the negative electrode composite layer may comprise a central portion and an outer portion located external to the central portion in the transverse direction. An occupancy ratio of the first surface region in the central portion may differ from an occupancy ratio of the first surface region in the outer portion.

In a tenth aspect of the technology disclosed herein according to the ninth aspect, the occupancy ratio of the first surface region may be higher in the central portion than in the outer portion.

According to the configuration above, the bonding is improved in the central portion than in the outer portion, which suppresses expansion of the negative electrode composite layer in the central portion.

In an eleventh aspect of the technology disclosed herein according to the ninth aspect, the occupancy ratio of the first surface region may be higher in the outer portion than in the central portion.

According to the configuration above, the bonding is improved in the outer portion than in the central portion, which suppresses separation of the adhesive layer in the outer portion.

In a twelfth aspect of the technology disclosed herein according to the first to eleventh aspects, the adhesive layer may comprise a resin as a base material.

In a thirteenth aspect of the technology disclosed herein according to the twelfth aspect, the resin may comprise an acrylic resin or polyvinylidene fluoride resin.

In a fourteenth aspect of the technology disclosed herein, a secondary battery may comprise a positive electrode and a negative electrode facing each other with a separator interposed therebetween. The negative electrode may comprise a negative electrode current collector; a negative electrode composite layer disposed on the negative electrode current collector and containing graphite particles; and an adhesive layer disposed between a surface of the negative electrode composite layer and the separator. The surface of the negative electrode composite layer that faces the separator may comprise a first surface region and a second surface region. An orientation angle may be defined as an angle formed between a layer plane of the graphite particle having a layered structure and a surface of the negative electrode current collector, and an average orientation angle in the first surface region may be smaller than an average orientation angle in the second surface region.

According to the configuration above, the first surface region has a smaller surface roughness than the second surface region, which improves the bonding with the adhesive layer in the first surface region and facilitates insertion and extraction of metal ions into and from the layers of the graphite particles in the second surface region.

The technology disclosed herein is also embodied in a method of manufacturing a secondary battery. A fifteenth aspect of the technology disclosed herein is directed to a method of manufacturing a secondary battery in which a positive electrode and a negative electrode face each other with a separator interposed therebetween. The method may comprise applying a paste containing graphite particles and a solvent onto a surface of a negative electrode current collector to form a negative electrode composite layer; applying an external magnetic field to the negative electrode composite layer; drying the negative electrode composite layer after the external magnetic field has been applied; pressing a first surface region, which is a part of a surface of the negative electrode composite layer excluding a second surface region, after the drying; forming an adhesive layer on a part of a surface of the separator corresponding to the first surface region; and bringing the surface of the negative electrode composite layer and the surface of the separator into contact such that the adhesive layer is positioned within the first surface region.

According to the configuration above, the first surface region is pressed, which improves the bonding with the adhesive layer. Further, the adhesive layer is not formed on the second surface region, which facilitates migration of metal ions in the second surface region.

In a sixteenth aspect of the technology disclosed herein according to the fifteenth aspect, the negative electrode current collector and the separator may each have an elongated sheet-like shape. The first surface region and the second surface region may each have a constant width and extend on the surface of the negative electrode composite layer in a longitudinal direction of the negative electrode current collector. The first surface region and the second surface region may be arranged adjacent to each other in a transverse direction perpendicular to the longitudinal direction. The adhesive layer may have a constant width and extend on a surface of the separator in the longitudinal direction.

In a seventeenth aspect of the technology disclosed herein according to the sixteenth aspect, in the pressing of the first surface region, a roller having a width corresponding to the width of the first surface region in the transverse direction may be moved in the longitudinal direction with the roller being in contact with the surface of the negative electrode composite layer.

According to the configuration above, the first surface region is continuously formed, which improves processing efficiency.

In an eighteenth aspect of the technology disclosed herein according to the seventeenth aspect, the roller may comprise a plurality of rollers. In the pressing of the first surface region, the plurality of rollers arranged in the transverse direction may be used. A distance between adjacent rollers in the transverse direction may correspond to the width of the second surface region in the transverse direction.

According to the configuration above, a plurality of first surface regions is formed at once, which improves processing efficiency.

Representative, non-limiting examples of the present disclosure will now be described in further detail with reference to the attached drawings. This detailed description is merely intended to teach a person of skill in the art further details for practicing preferred aspects of the present teachings and is not intended to limit the scope of the disclosure. Furthermore, each of the additional features and teachings disclosed below may be utilized separately or in conjunction with other features and teachings to provide improved secondary batteries and methods of manufacturing the same.

Moreover, combinations of features and steps disclosed in the following detailed description may not be necessary to practice the disclosure in the broadest sense, and are instead taught merely to particularly describe representative examples of the disclosure. Furthermore, various features of the above-described and below-described representative examples, as well as the various independent and dependent claims, may be combined in ways that are not specifically and explicitly enumerated in order to provide additional useful embodiments of the present teachings.

All features disclosed in the description and/or the claims are intended to be disclosed separately and independently from each other for the purpose of original written disclosure, as well as for the purpose of restricting the claimed subject matter, independent of the compositions of the features in the embodiments and/or the claims. In addition, all value ranges or indications of groups of entities are intended to disclose every possible intermediate value or intermediate entity for the purpose of original written disclosure, as well as for the purpose of restricting the claimed subject matter.

The grammatical articles "a," "an," and "the," as used in this specification, including the claims, are intended to include "at least one" or "one or more" unless otherwise indicated. Thus, the articles are used in this specification to refer to one or more than one (i.e., to "at least one") of the grammatical objects of the article. By way of example, "a component" means one or more components and, thus, possibly more than one component is contemplated and can be employed or used in an implementation of the described compositions, coatings, and processes. Nevertheless, it is understood that use of the terms "at least one" or "one or more" in some instances, but not others, will not result in any interpretation where failure to use the terms limits objects of the grammatical articles "a," "an," and "the" to just one. Further, the use of a singular noun includes the plural, and the use of a plural noun includes the singular, unless the context of the usage requires otherwise.

### First Embodiment

### Structure of Secondary Battery 1

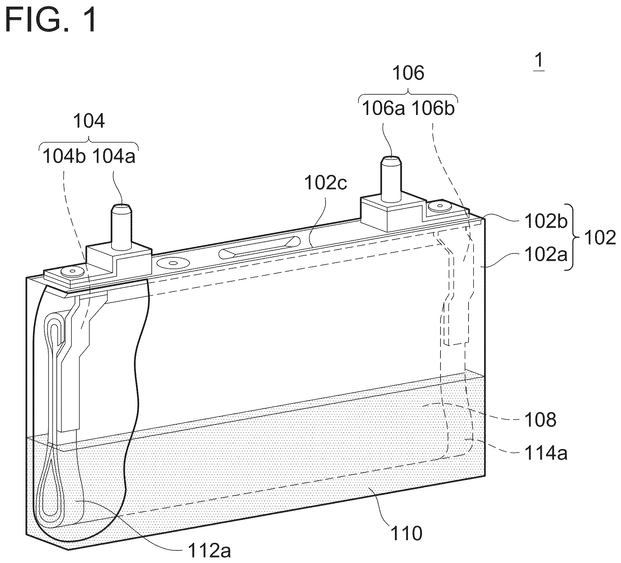

FIG. 1 is a perspective view of a secondary battery 1 according to an embodiment. In this embodiment, the secondary battery 1 is exemplified as a lithium-ion secondary battery. As illustrated in FIG. 1, the secondary battery 1 comprises a housing 102, a positive electrode terminal 104, a negative electrode terminal 106, an electrode assembly 108, and a non-aqueous electrolyte 110. The housing 102 houses the electrode assembly 108 and the non-aqueous electrolyte 110. The housing 102 comprises a housing body 102a and a cover plate 102b. The housing body 102a is an enclosure having an opening 102c in its upper portion. The cover plate 102b is attached to the opening 102c to close the opening 102c.

The positive electrode terminal 104 and the negative electrode terminal 106 are attached to the cover plate 102b. An end portion 104a of the positive electrode terminal 104 is exposed to the outside of the housing 102. The other end portion 104b of the positive electrode terminal 104 is connected to a positive electrode connecting portion 112a of the electrode assembly 108 within the housing 102. An end portion 106a of the negative electrode terminal 106 is exposed to the outside of the housing 102. The other end portion 106b of the negative electrode terminal 106 is connected to a negative electrode connecting portion 114a of the electrode assembly 108 within the housing 102.

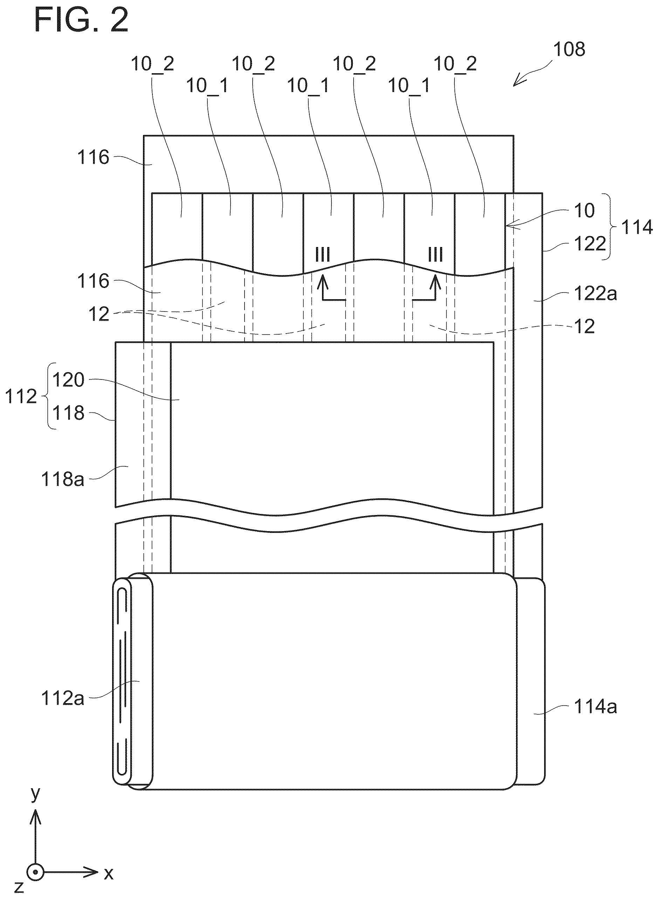

FIG. 2 is an exploded plan view of the electrode assembly 108. The electrode assembly 108 comprises a positive electrode 112, a negative electrode 114, and a separator 116. Each of the positive electrode 112, the negative electrode 114, and the separator 116 has an elongated sheet shape. The positive electrode 112 and the negative electrode 114 are stacked with the separator 116 interposed therebetween. The stack of the positive electrode 112 and the negative electrode 114 is rolled up to form the electrode assembly 108. However, the electrode assembly 108 is not necessarily a rolled electrode assembly. The electrode assembly 108 may, for example, be a so-called stacked electrode assembly in which multiple positive electrodes 112 and multiple negative electrodes 114 are alternately stacked with a separator 116 interposed between each pair of the positive electrode 112 and the negative electrode 114.

The positive electrode 112 comprises a positive electrode current collector 118 and a positive electrode active material sheet 120. The positive electrode current collector 118 is a conductive sheet. The positive electrode current collector 118 is, for example, an aluminum foil. The positive electrode active material sheet 120 is located on a surface of the positive electrode current collector 118. The positive electrode active material sheet 120 comprises a positive electrode active material. The positive electrode active material is, for example, a lithium composite oxide. The positive electrode 112 comprises a positive electrode exposure portion 118a in one of its widthwise side portions, and the positive electrode current collector 118 is exposed in the positive electrode exposure portion 118a. The positive electrode exposure portion 118a is rolled up in forming the electrode assembly 108 to form the positive electrode connecting portion 112a.

The negative electrode 114 comprises a negative electrode current collector 122 and a negative electrode composite layer 10. The negative electrode current collector 122 is a conductive sheet. The negative electrode current collector 122 is, for example, a copper foil. The negative electrode composite layer 10 is located on a surface of the negative electrode current collector 122. The negative electrode 114 will be detailed more specifically later. The negative electrode 114 comprises a negative electrode exposure portion 122a in one of its widthwise side portions, and the negative electrode current collector 122 is exposed in the negative electrode exposure portion 122a. The negative electrode exposure portion 122a is rolled up in forming the electrode assembly 108 to form the negative electrode connecting portion 114a.

The separator 116 is configured to allow charge carriers (i.e., lithium ions herein) to pass therethrough. Examples of the separator 116 include, for example, porous polymer films such as porous polyethylene films, porous polypropylene films, porous polyolefin films, and porous polyvinyl chloride films and lithium-ion-conductive polymer electrolyte membranes. One of these may be used as the separator 116, or some of these may be used in combination as the separator 116.

Adhesive layers 12 are formed on a surface of the separator 116. Further, first surface regions 10_1 and second surface regions 10_2 are formed on a surface of the negative electrode composite layer 10. The adhesive layers 12, the first surface regions 10_1, and the second surface regions 10_2 will be detailed later.

The non-aqueous electrolyte 110 permeates the interior of the electrode assembly 108. The non-aqueous electrolyte 110 comprises a non-aqueous solvent and an electrolyte salt. Examples of the non-aqueous solvent include, for example, carbonate-based solvents, ether-based solvents, ester-based solvents, nitrile-based solvents, sulfone-based solvents, and lactone-based solvents. The electrolyte salt is, for example, a fluorine-containing lithium salt. Each of the non-aqueous solvent and the electrolyte salt may comprise a single material or a combination of materials.

### Structure of Negative Electrode 114

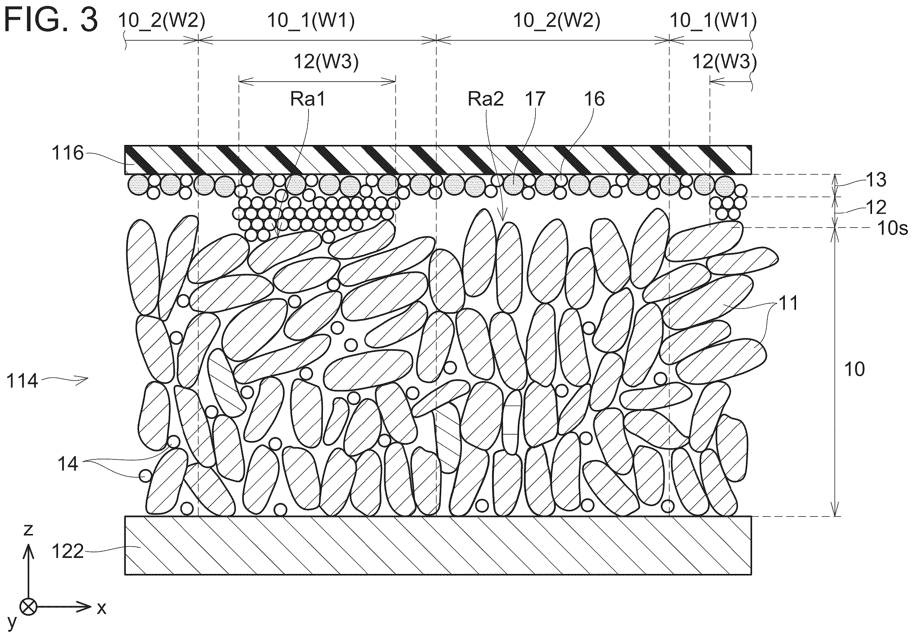

FIG. 3 illustrates a cross-sectional view of the negative electrode 114. The cross section illustrated in FIG. 3 is taken along a line III-III in FIG. 2. For clarity of illustration, FIG. 3 illustrates only one surface of the negative electrode 114. Further, in FIG. 3, the longitudinal direction of the negative electrode current collector 122 having an elongated sheet-like shape is indicated as a y-direction, and the transverse direction perpendicular to the longitudinal direction is indicated as an x-direction. Further, in FIG. 3, a direction perpendicular to the negative electrode current collector 122 (a thickness direction of the negative electrode 114) is labeled as a z-direction. For clarity of illustration, only one of a plurality of components may be labeled with a reference sign. This applies to all the drawings.
The negative electrode 114 mainly comprises the negative electrode current collector 122, the negative electrode composite layer 10, the adhesive layers 12, and a porous layer 13.

The adhesive layers 12 are located between a surface 10s of the negative electrode composite layer 10 and the porous layer 13. The adhesive layers 12 comprise resin but does not contain additive particles 17. The material of the adhesive layers 12 may be an ion-permeable resin. In this case, migration of lithium ions is not hindered by the adhesive layers 12. In FIG. 3, for clarity of illustration, the adhesive layers 12 are schematically depicted as small white circles. The material of the adhesive layers 12 may be any material. For example, the material of the adhesive layers 12 may be the same as the material of a binder 14, which will be described later. In this case, the adhesive layers 12 have a bonding property. In the present embodiment, the material of the adhesive layers 12 is the same PVDF as that of the binder 14.

The porous layer 13 is in contact with the separator 116. The porous layer 13 contains resin 16 and additive particles 17. That is, the porous layer 13 comprises the resin 16 as its base material. In FIG. 3, for clarity of illustration, the resin 16 is schematically depicted as small white circles, and the additive particles 17 are schematically depicted as gray-shaded circles.
The material of the resin 16 may be the same as the material of a binder 14, which will be described later. In the present embodiment, the material of the resin is the same PVDF as the material of the binder 14.

The material of the additive particles 17 may be heat-resistant, electrically insulating, and highly resistant to the electrolyte. Examples of the material of the additive particles 17 include metal compounds and polymeric compounds such as polyimide. Examples of the metal compounds include alpha-alumina (α-Al₂O₃), boehmite (Al₂O₃·H₂O), magnesium hydroxide (Mg(OH)₂), and magnesium carbonate (MgCO₃). One or more of these materials may be used as the material of the additive particles 17.

The additive particles 17 contained in the porous layer 13 are bonded to each other by the resin 16, thereby forming a heat-resistant porous layer. This prevents an internal short circuit in the secondary battery 1.

The negative electrode composite layer 10 is located on the negative electrode current collector 122. The negative electrode composite layer 10 comprises graphite particles 11, the binder 14, and a conductive additive (not illustrated). For the graphite particles 11, graphite-based carbon materials, such as natural graphite, synthetic graphite, or amorphous forms thereof, may be used. The graphite particles 11 may comprise, for example, flat flake graphite or spherical graphite obtained by sphering flake graphite. In the present embodiment, flake graphite is used as the graphite particles 11. This is because flake graphite can be stably aligned by application of magnetic field due to its flatness.

In FIG. 3, the graphite particles 11 are hatched. The median diameter of the graphite particles 11 is, for example, in the range of 15 to 40 micrometers. The median diameter herein means the particle diameter (D50) at 50% cumulative volume in a volume-based particle size distribution measured by a laser diffraction/scattering method. In the present embodiment, the median diameter of the graphite particles 11 is 20 micrometers.

The binder 14 is a component to bind the graphite particles 11 together. The binder 14 is incorporated in the negative electrode composite layer 10. The binder 14 comprises resin particles. In FIG. 3, the binder 14 is schematically depicted as white circles. Examples of the binder 14 include, for example, polyvinylidene fluoride (PVDF), various acrylic-based resins, carboxymethyl cellulose (CMC), styrene-butadiene rubber (SBR), and polytetrafluoroethylene (PTFE).

As the acrylic-based resins may be homopolymers obtained by polymerizing a single monomer, such as acrylic acid, methacrylic acid, acrylamide, methacrylamide, 2-hydroxyethyl acrylate, 2-hydroxyethyl methacrylate, methacrylate, methyl methacrylate, 2-ethylhexyl acrylate, and butyl acrylate. Alternatively, the acrylic-based resins may be copolymers obtained by polymerizing two or more of the above-listed monomers.

The binder 14 may comprise a single material or a combination of materials. In the present embodiment, the material of the binder 14 is PVDF.

The first surface regions 10_1 and the second surface regions 10_2 are formed on the surface 10s of the negative electrode composite layer 10 that faces the separator 116. The first surface regions 10_1 are pressed in a first surface region forming step (step S105), which will be detailed later. The second surface regions 10_2 are not pressed in the first surface region forming step. A surface roughness Ra1 of the first surface regions 10_1 is smaller than a surface roughness Ra2 of the second surface regions 10_2. Various parameters may be used for the surface roughness Ra1 and the surface roughness Ra2. Herein, arithmetical mean roughness is used as the surface roughness. The arithmetical mean roughness can be measured according to JIS B 0601:2001.

The surface roughness Ra1 and the surface roughness Ra2 may take any value as long as the surface roughness Ra1 is smaller than the surface roughness Ra2. In the present embodiment, the surface roughness Ra1 is 1.5 µm, and the surface roughness Ra2 is larger than 1.5 µm.

As illustrated in FIG. 2, each first surface region 10_1 has a constant width and extends in the longitudinal direction of the negative electrode current collector 122 (i.e., y-direction) on the surface of the negative electrode composite layer 10, and each second surface region 10_2 has a constant width and extends in the longitudinal direction of the negative electrode current collector 122 (i.e., y-direction) on the surface of the negative electrode composite layer 10. Further, the first surface regions 10_1 and the second surface regions 10_2 are arranged adjacent to each other (i.e., alternately) in the transverse direction (i.e., x-direction).

Each adhesive layer 12 has a constant width and extends in the longitudinal direction (i.e., y-direction) on the surface of the separator 116. The adhesive layers 12 are disposed within the first surface regions 10_1 but not disposed within the second surface regions 10_2. In other words, the adhesive layers 12 are located between the first surface regions 10_1 and the separator 116 but not located between the second surface regions 10_2 and the separator 116.

As illustrated in FIG. 3, the first surface region 10_1 has a width W1 extending in the transverse direction (i.e., x-direction), and the second surface region 10_2 has a width W2 extending in the transverse direction. Further, the adhesive layer 12 has a width W3 extending in the transverse direction. The width W1 is larger than the width W3. The width W1 and the width W3 may take any values as long as the width W1 is larger than the width W3.

### Degree of Orientation of Graphite Particles

As described above, the graphite particles 11 comprise flat flake graphite. The flake graphite comprises a stack of numerous plate-shaped (graphene) layers each having a hexagonal crystal structure. Therefore, the graphite particles 11 each have a substantially plate shape. Further, the graphite particles 11 each comprise a (002) plane and a (110) plane. The (002) plane is a layer plane of the layered graphite particle (i.e., a plane parallel to graphite layers). The (002) plane is parallel to a carbon network of graphene sheets of the graphite particle 11. The (110) plane is an end plane of the layered graphite particle (i.e., a plane perpendicular to the graphite layers). The (110) plane is perpendicular to the (002) plane of the graphite particle. In other words, as illustrated in FIG. 3, each graphite particle 11 has an elongated shape in which the length in the direction parallel to the layer plane is greater than the length in the direction perpendicular to the layer plane.

Here, "degree of orientation" of the graphite particles 11 is defined as follows. The peak intensity derived from the (110) plane of the graphite particle 11 measured by powder X-ray diffraction (XRD) is denoted as PI1. The peak intensity derived from the (002) plane is denoted as PI2. The peak intensity PI1 is derived from the a-b axis direction of the graphite crystal. The peak intensity PI2 is derived from the c-axis direction of the graphite crystal. Then, the intensity ratio obtained by dividing the peak intensity PI1 by the peak PI2 is defined as the degree of orientation. That is, the degree of orientation - PI1/PI2.

A larger degree of orientation can be construed as meaning that there are more graphite particles 11 with their c-axes oriented parallel to the negative electrode current collector 122 (i.e., along the x-y plane in FIG. 3) in the negative electrode composite layer 10. That is, a larger degree of orientation means that the proportion of graphite particles 11 whose layer planes (longitudinal planes) are angled relative to the surface of the negative electrode current collector 122 is higher.

The inventors of the present invention have found that the degree of orientation in the negative electrode composite layer 10 is less than 0.03 when the magnetic alignment described below is not performed, and that the magnetic alignment can increase the degree of orientation in the negative electrode composite layer 10 to 0.03 or greater. That is, whether the magnetic alignment has been performed or not can be determined based on whether the degree of orientation in the negative electrode composite layer 10 is 0.03 or greater or not.

The degree of orientation measured in the first surface regions 10_1 is smaller than the degree of orientation measured in the second surface regions 10_2. This is because the graphite particles 11 near the surfaces of the first surface regions 10_1 are pushed down in by the pressing performed in step S105, as described above. Thus, the first surface regions 10_1 and the second surface regions 10_2 can be distinguished from each other based on the magnitude of the degree of orientation.

The degree of orientation measured in the second surface regions 10_2 is 0.03 or greater. This is because the graphite particles 11 near the surfaces of the second surface regions 10_2 are not pushed down by the pressing performed in step S105 and thus are maintained in the magnetically aligned state. Thus, regions having the degree of orientation of 0.03 or greater can be determined as the second surface regions 10_2.

### Method of Manufacturing Secondary Battery

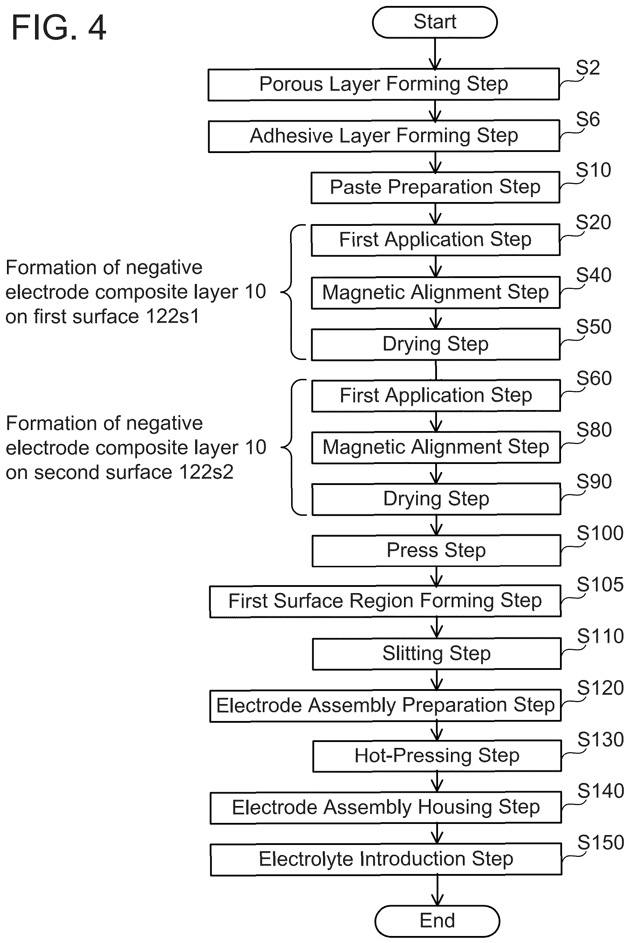

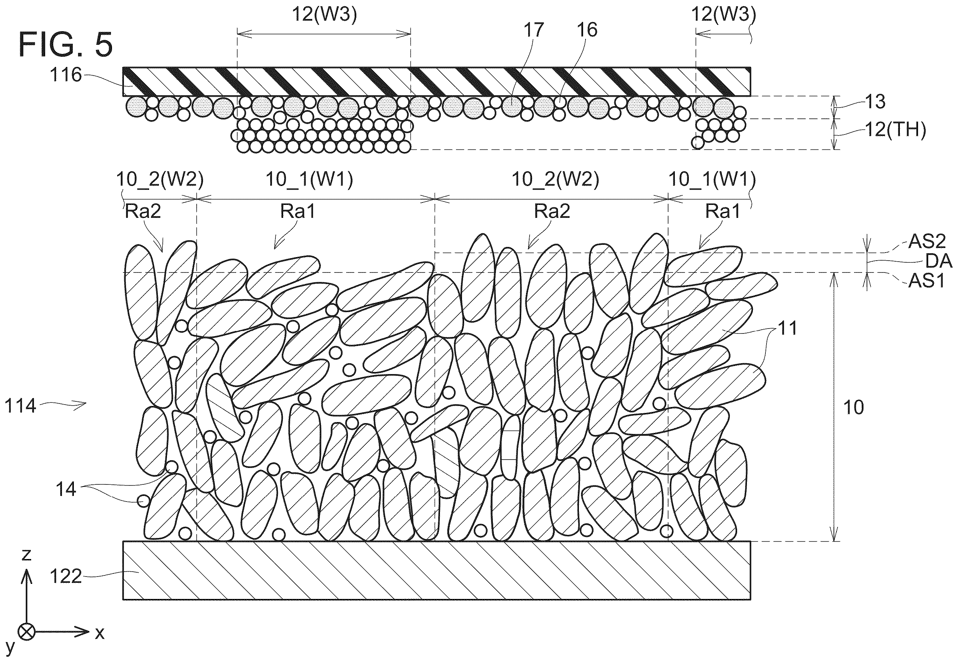

Referring to the flowchart illustrated in FIG. 4 and the schematic diagrams illustrated in FIGS. 5 to 11, a method of manufacturing the above-described secondary battery 1 is described. In step S2, the porous layer 13 is formed on a surface of the separator 116 (porous layer forming step). A coating composition used to form the porous layer 13 is a paste-like composition in which the resin 16, the additive particles 17 are dispersed in a solvent. This coating composition is applied onto a surface of the separator 116. For this application, a conventional, common application device may be used. Examples of the application device include, for example, gravure coaters, slit coaters, die coaters, comma coaters, and dip coaters. After the application, the solvent is removed using an appropriate drying means. As a result, the porous layer 13 is formed.

In step S6, the adhesive layers 12 are formed on a surface of the porous layer 13 (adhesive layer forming step). A coating composition used to form the adhesive layers 12 is a composition in which a resin is dispersed in a solvent. This coating composition is applied onto surface regions of the adhesive layers 12 corresponding the first surface regions 10_1. After the application, a drying step is performed if needed. Since conventional, common devices can be used for the application step and drying step in step S6, detailed description thereof is omitted.

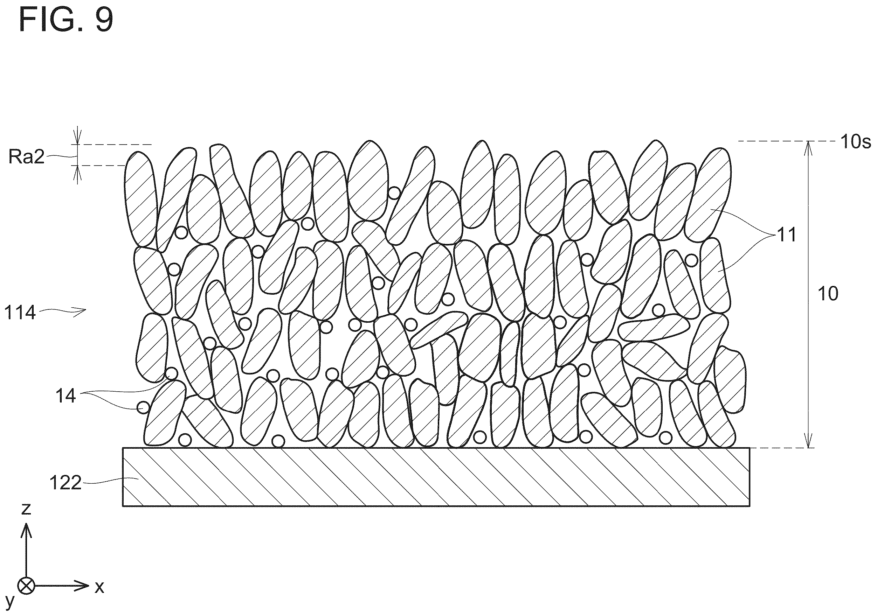

FIG. 5 illustrates the separator 116 after the adhesive layer forming step (step S6). FIG. 5 illustrates a cross-sectional view similar to that illustrated in FIG. 9. The adhesive layers 12 have an average thickness TH.

In step S10, a first paste is prepared (paste preparation step). The first paste contains the graphite particles 11. The paste may be in the form of a slurry or an ink.

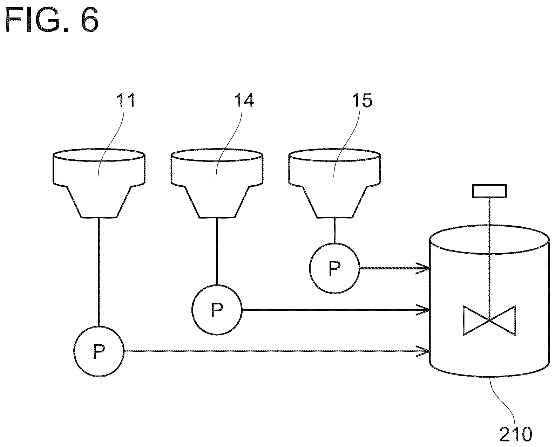

Referring to FIG. 6, an example of first paste preparation step is described. The graphite particles 11, the binder 14, and the conductive additive 15 are introduced into a kneader 210 in respective predetermined amounts. A solvent is added to the materials in the kneader 210, and the mixture is kneaded to produce the first paste. The kneader 210 may be any type. For example, a planetary mixer may be used as the kneader 210.

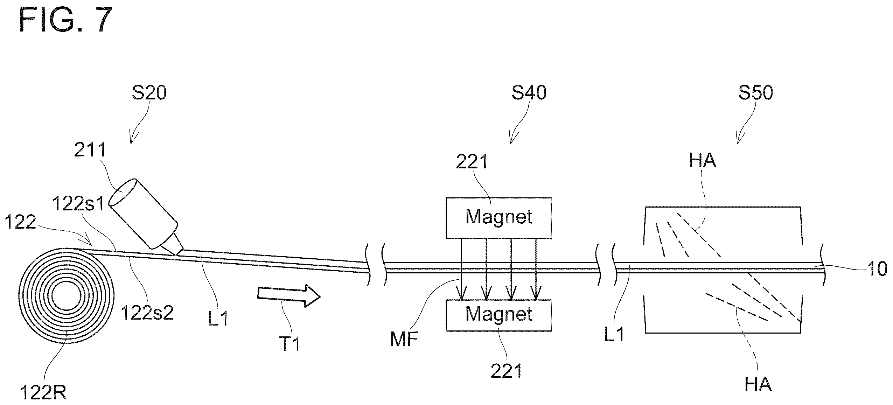

From step S20 to step S50, the negative electrode composite layer 10 is formed on a first surface 122s1 of the negative electrode current collector 122. These steps are specifically described referring to FIG. 7. In step S20, a first application step is performed. In the first application step, the first paste containing the graphite particles 11 is applied onto the surface of the negative electrode current collector 122. Specifically, the negative electrode current collector 122 is fed out in a feed direction T1 at a constant speed from a roll 122R around which the negative electrode current collector 122 is wound. Then, the first paste is applied onto the negative electrode current collector 122 using a first coater 211. As a result, a first layer L1 is formed. The first coater 211 may be any type of coater. For example, the first coater 211 may be a slot-die coater.

In step S40, an external magnetic field is applied to the first layer L1 (magnetic alignment step). Specifically, a magnetic field whose magnetic flux lines MF are approximately perpendicular to the surface of the negative electrode current collector 122 is applied using a magnetic field generator 221. The magnetic field generator 221 may, for example, be a permanent magnet or an electromagnet. In this step, the (002) planes of the graphite particles 11 are oriented substantially parallel to the magnetic flux lines.

In step S50, the first layer L1 is dried (drying step). Specifically, these layers are dried by blowing hot air HA thereto. The drying means used in the drying step is not limited to hot air and may be low-humidity air, vacuum, infrared radiation, far-infrared radiation, or electron-beam irradiation or any combination thereof. In the drying step, the solvents are removed from the first layer L1. As a result, the negative electrode composite layer 10 is formed on the first surface 122s1 of the negative electrode current collector 122.

From step S60 to step S90, the negative electrode composite layer 10 is formed on a second surface 122s2 of the negative electrode current collector 122. Since steps S60, S80 and S90 are the same as steps S20, S40 and S50 described above, detailed description thereof is omitted. As a result of steps S60 to S90, the negative electrode 114 is formed. The negative electrode 114 has a structure where the negative electrode composite layers 10 are located on both surfaces of the negative electrode current collector 122, respectively.

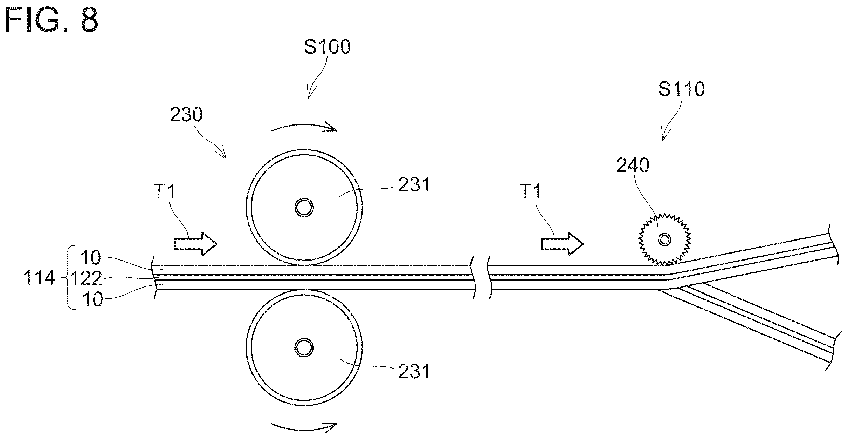

In step S100, the negative electrode 114 is pressed (press step). As illustrated in FIG. 8, a roll-press device 230 is used in the press step, although this is merely an example. The roll-press device 230 is configured to roll out the negative electrode 114 while it passes between a pair of rollers 231. The density and thickness of the negative electrode composite layers 10 can thereby be adjusted.

FIG. 9 illustrates the negative electrode composite layer 10 after the pressing in step S100. FIG. 9 illustrates a cross-sectional view similar to that illustrated in FIG. 3. At this stage, the surface 10s of the negative electrode composite layer 10 is exposed. Since the graphite particles 11 have been magnetically aligned, the surface roughness Ra2 of the surface 10s is large.

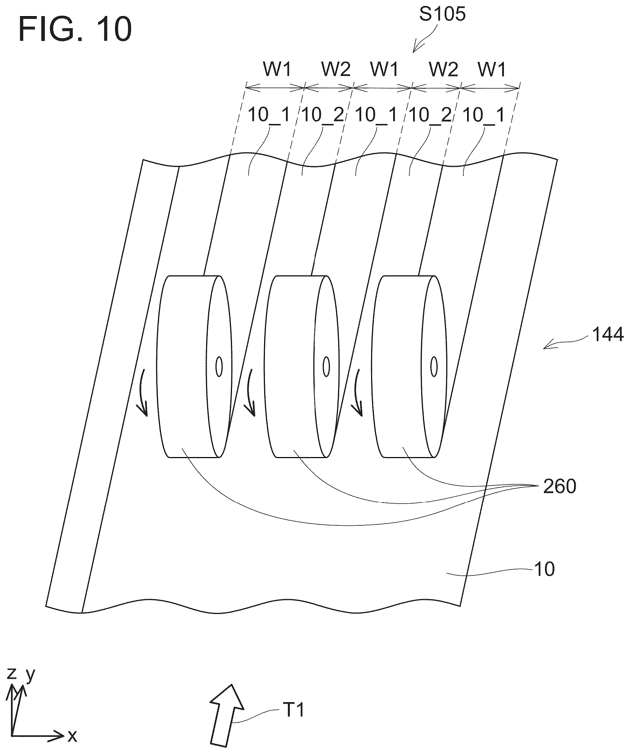

In step S105, a first surface region forming step is performed. In this step, the first surface regions 10_1, which are portions of the surface 10s of the negative electrode composite layer 10 excluding the second surface regions 10_2, are pressed. The pressing pressure applied in step S105 may be greater than the pressing pressure applied in step S100 described above. Specifically, as illustrated in FIG. 10, a plurality of rollers 260 arranged in the transverse direction (i.e., x-direction) is used. The width of each roller 260 is the same as the width W1 of each first surface region 10_1. The distance between adjacent rollers 260 in the transverse direction corresponds to the width W2 of each second surface region 10_2. The rollers 260 are moved in the longitudinal direction (i.e., y-direction) while being in contact with the surface of the negative electrode composite layer 10. As a result, a configuration where the first surface layers 10_1 and the second surface layers 10_2 are alternately arranged in the form of stripes is formed.

FIG. 5 illustrates the negative electrode composite layer 10 after the first surface region forming step (i.e., step S105). The graphite particles 11 near the surfaces of the first surface regions 10_1 are pushed down since the first surface regions 10_1 have been pressurized by the rollers 260. Thus, the surfaces of the first surface regions 10_1 are depressed. Further, the surface roughness of the first surface regions 10_1 is decreased from the surface roughness Ra2 to the surface roughness Ra1.

Here, a depression amount DA is described. The depression amount DA is the depth of depressions in the surfaces of the first surface regions 10_1. The mean plane of the first surface regions 10_1 is termed a mean plane AS1, and the mean plane of the second surface regions 10_2 is termed a mean plane AS2. The mean plane may, for example, be defined as the average of reference lengths extracted from the roughness profile of the surface 10s. The depression amount DA is defined as the difference between the mean plane AS1 and the mean plane AS2.

The depression amount DA and a thickness TH of the adhesive layers 12 are correlated. Specifically, the depression amount DA is equal to or less than the thickness TH of the adhesive layers 12. The depression amount DA and the thickness TH may take any value as long as they satisfy the above relationship. For example, the depression amount DA may be in the range of 0 to 3 micrometers, and the thickness TH may be in the range of 0.5 to 3 micrometers.

In step S110, slitting is performed. As illustrated in FIG. 8, during slitting, the negative electrode 114 is cut by a cutter 240 while fed in the feed direction T1. Thereby, the width of the negative electrode 114 in its transverse direction can be cut into the width corresponding to the size of the secondary battery 1.

In step S120, the electrode assembly 108 is prepared (electrode assembly preparation step). As illustrated in FIG. 2, in the electrode assembly preparation step, the positive electrode 112, the negative electrode 114, and the separator 116 are stacked on top of each other such that the positive electrode 112 and the negative electrode 114 face each other with the separator 116 interposed therebetween. The electrode assembly 108 is completed by rolling up this stack.

Referring to FIG. 5, how the negative electrode 114 and the separator 116 are stacked is described. The negative electrode 114 and the separator 116 are aligned with each other such that the adhesive layers 12 are positioned within the first surface regions 10_1 in the transverse direction (i.e., x-direction). Then, the surface of the negative electrode composite layer 10 is brought into contact with the surface of the separator 116. As described above, the depression amount DA of the first surface regions 10_1 is equal to or less than the thickness TH of the adhesive layers 12. This ensures that the surfaces of the first surface regions 10_1 contact the surfaces of the adhesive layers 12.

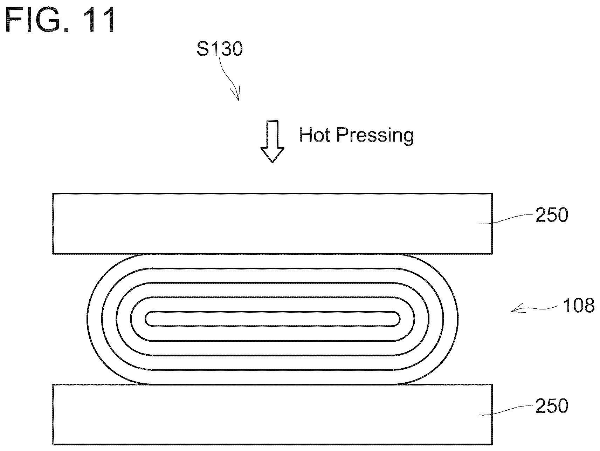

In step S130, the electrode assembly 108 is hot-pressed (hot-pressing step). As illustrated in FIG. 11, a flat platen press 250 is used in the hot-pressing step, although this is merely an example. Thereby, the electrode assembly 108 is compressed to have a flat shape having a predetermined thickness.
In the hot-pressing step, the first surface regions 10_1 and the adhesive layers 12 are heated while they are in contact with each other, as illustrated in FIG. 3. Thereby, the separator 116 and the negative electrode composite layer 10 can be bonded to each other via the resin layer 12.
This hot-pressing step may be performed after an electrolyte introduction step (S150), which will be described later.

In step S140, an electrode assembly housing step is performed. Specifically, as illustrated in FIG. 1, the positive electrode terminal 104 and the negative electrode terminal 106 attached to the cover plate 102b are welded to opposing end portions of the electrode assembly 108, respectively. The electrode assembly 108 is housed into the housing body 102a through the opening 102c. Then, the housing body 102a and the cover plate 102b are bonded together, for example, by laser welding.

In step S150, the non-aqueous electrolyte is introduced into the housing 102 through an inlet (not illustrated) (electrolyte introduction step). Then, the inlet is hermetically sealed using a sealing member. As a result, the secondary battery 1 is completed.

### Problem

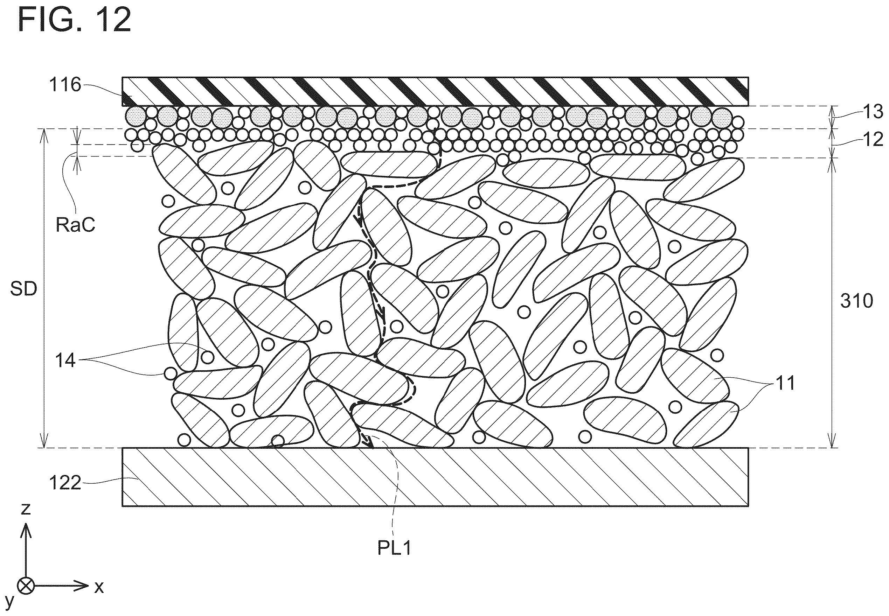

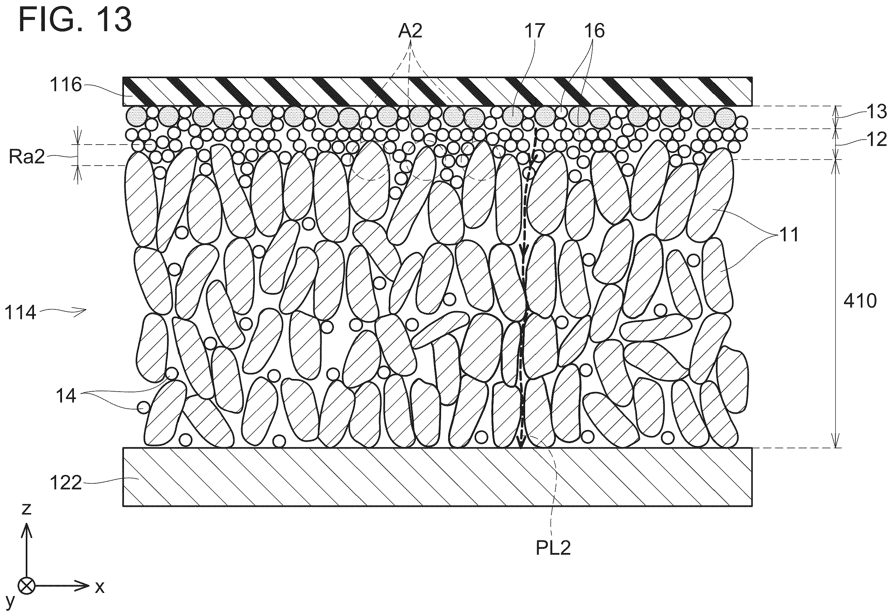

Referring to a first comparative example illustrated in FIG. 12 and a second comparative example illustrated in FIG. 13, a problem is described. FIGS. 12 and 13 illustrate cross-sectional views similar to FIG. 3. The first comparative example (FIG. 12) is different from the embodiment (FIG. 3) in that the negative electrode composite layer 310 is not magnetically aligned yet. Further, the second comparative example (FIG. 13) is different from the embodiment (FIG. 3) in that the first surface regions 10_1 are not formed. A negative electrode composite layer 410 of the second comparative example is magnetically aligned.

The negative electrode composite layer 310 of the first comparative example (FIG. 12) is not magnetically aligned yet. Therefore, the surface planes (longitudinal planes) of the graphite particles 11 are not oriented substantially perpendicular to the negative electrode current collector 122 (i.e., along the z-direction). Thus, a path length PL1 of pores from the separator 116 to the negative electrode current collector 122 is large. That is, the tortuosity in the negative electrode composite layer 310 is large. The tortuosity herein is defined as a ratio of the path length PL1 to a straight-line distance SD from the separator 116 to the negative electrode current collector 122. A larger tortuosity leads to less smooth insertion and extraction of Li ions into and from between the layers of the graphite particles 11. Thus, a larger tortuosity increases internal resistance in the secondary battery 1 and impairs the performance of the secondary battery 1.

In contrast, the negative electrode composite layer 410 of the second comparative example (FIG. 13) is magnetically aligned. Therefore, the surface planes (longitudinal planes) of the graphite particles 11 are oriented substantially perpendicular to the negative electrode current collector 122 (i.e., along the z-direction). Thus, a path length PL2 of pores in the embodiment is shorter than the path length PL1 of pores in the first comparative example. That is, the tortuosity in the second comparative example is smaller than that in the first comparative example, which reduces the internal resistance. However, when the graphite particles 11 are magnetically aligned, angles formed between the surface planes of the graphite particles 11 and the surface of the negative electrode current collector 122 are larger. Thus, sharp end planes (i.e., (110) planes) of the graphite particles 11 project upward from the surface of the negative electrode composite layer 10 (see areas A2). This makes a surface roughness Ra2 of the negative electrode composite layer 410 of the second comparative example greater than a surface roughness RaC of the negative electrode composite layer 310 of the first comparative example. Therefore, the bonding between the magnetically aligned negative electrode composite layer and the separator 116 may be worse than the bonding between the non-magnetically aligned negative electrode composite layer and the separator 116.

### Advantageous Effects

According to the technology disclosed herein (FIG. 3), the surface roughness Ra2 of the second surface regions 10_2 is greater than the surface roughness Ra1 of the first surface regions 10_1. That is, The sharp end planes (i.e., (110) planes) of the graphite particles 11 project more upward from the surface in the second surface regions 10_2 than in the first surface regions 10_1. Thus, the degree of orientation in the surfaces of the second surface regions 10_2 is greater than the degree of orientation in the surfaces of the first surface regions 10_1. Therefore, lithium ions can be more smoothly inserted into and extracted from the layers of the graphite particles 11 in the second surface regions 10_2 than in the first surface regions 10_1. Further, since the surface roughness Ra1 of the first surface regions 10_1 is smaller than the surface roughness Ra2 of the second surface regions 10_2, the bonding with the adhesive layers 12 is improved. Further, according to the technology disclosed herein, the secondary battery comprises both the first surface regions 10_1 and the second surface regions 10_2. This improves the bonding between the negative electrode composite layer 10 and the separator 116 and also improves the performance of the secondary battery.

The first surface regions 10_1 have a smaller surface roughness than the second surface regions 10_2. Thus, the first surface regions 10_1 bond more firmly with the adhesive layers 12 than the second surface regions 10_2 do. According to the technology disclosed herein, the adhesive layers 12 are selectively located within the first surface regions 10_1. Thus, by bonding the first surface regions 10_1 and the adhesive layers 12 together, the bonding strength between the negative electrode composite layer 10 and the separator 116 can be ensured. Further, lithium ions can easily migrate in the second surface regions 10_2 having a greater degree of orientation since the adhesive layers 12 are not located thereon. Thus, the bonding and the performance of the secondary battery are both improved.

The alignment between the first surface regions 10_1 and the adhesive layers 12 in the electrode assembly preparation step (i.e., step S120 and FIG. 5) may involve some displacement due to various errors. Such errors include, for example, an error in applying the adhesive layers 12 in the adhesive layer forming step (step S6), an error in pressing the first surface regions 10_1 in the first surface region forming step (step S105), and an assembly error in the electrode assembly preparation step (step S120). In view of this, according to the technology disclosed herein, the width W1 of the first surface regions 10_1 is greater than the width W3 of the adhesive layers 12. This ensures that the adhesive layers 12 are located within the first surface regions 10_1 even when displacement occurs between the first surface regions 10_1 and the adhesive layers 12. The width W1 may be larger than the width W3 by a value obtained by multiplying the various errors or more.

### Orientation Angle of Graphite Particles

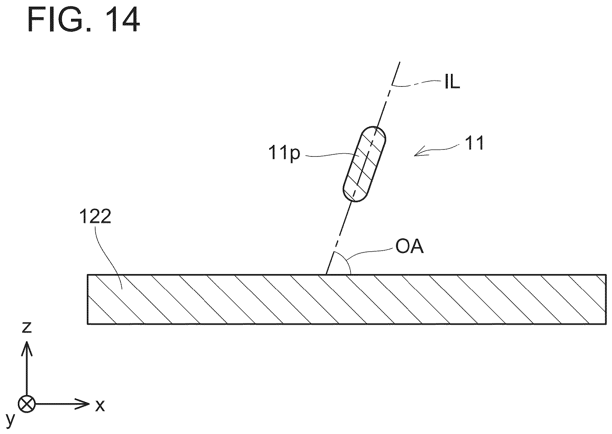

Referring to FIG. 14, an orientation angle of the graphite particles 11 is described. FIG. 14 illustrates a cross-sectional view similar to that illustrated in FIG. 3. FIG. 14 illustrates a single graphite particle 11 as a representative. The graphite particle 11 comprises a layer plane 11p. As described above, the layer plane 11p is the (002) plane parallel to the graphite layers. The direction in which the layer plane 11p extends is indicated by an imaginary line IL. Further, an angle formed between the imaginary line IL and the surface of the negative electrode current collector 122 is termed an orientation angle OA.

The orientation angle OA can be measured in a cross-sectional SEM image of the negative electrode composite layer 10. For example, in a cross section of the negative electrode composite layer 10 taken at a random position, multiple (e.g., 50) graphite particles 11 may be extracted from the surface layer 10A. Then, an orientation angle OA may be measured for each of the extracted graphite particles 11 to determine an arithmetic mean value of the measured values.

The average orientation angle OA in the first surface regions 10_1 is smaller than the average orientation angle OA in the second surface regions 10_2. The reason is as follows. The magnetic alignment of the graphite particles 11 in the magnetic alignment step (steps S40, S80) increases the average orientation angle OA. Then, the first surface regions 10_1 are pressed in the first surface region forming step (step S105). As a result, the graphite particles 11 near the surfaces of the first surface regions 10_1 are pushed down, thereby decreasing the average orientation angle OA in the first surface regions 10_1. In contrast, the average orientation angle OA in the second surface regions 10_2 does not change since the graphite particles 11 near the surfaces of the second surface regions 10_2 are not pushed down.

As above, the first surface regions 10_1 and the second surface regions 10_2 can be distinguished from each other by measuring the orientation angles near the surface of the negative electrode composite layer 10.

### Second Embodiment

The second embodiment is different from the first embodiment in that the arrangement of the first surface regions 10_1 in the transverse direction (i.e., x-direction). The same components in the first and second embodiments are denoted by the same reference signs, and description thereof is omitted.

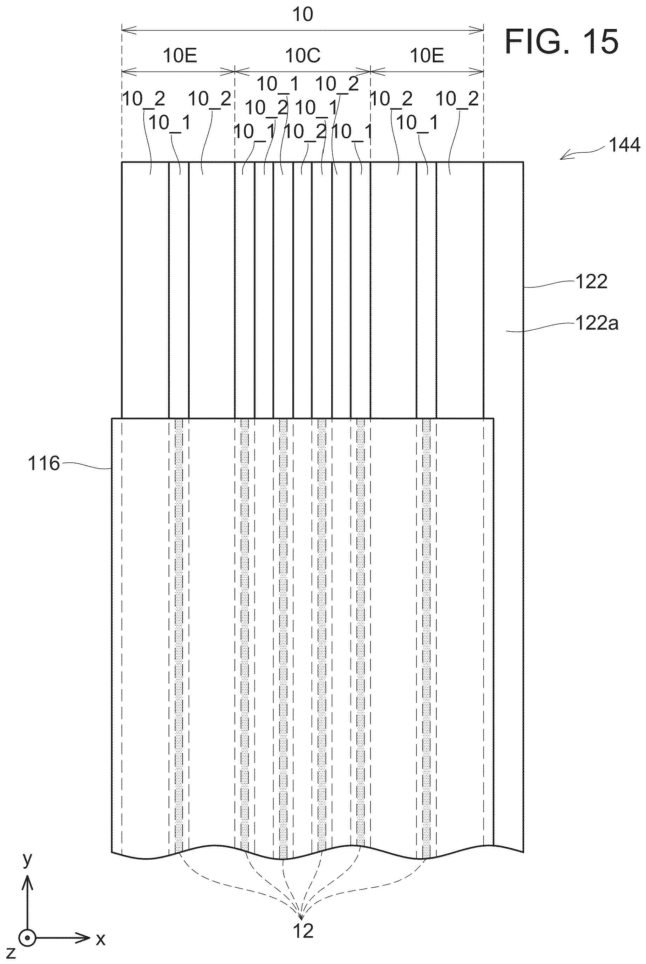

Referring to FIG. 15, a first example of the second embodiment is described. FIG. 15 illustrates an exploded plan view of the negative electrode 114 and the separator 116. FIG. 15 is similar to FIG. 2. In FIG. 15, the adhesive layers 12 disposed on the back surface of the separator 116 are shaded gray. The surface of the negative electrode composite layer 10 comprises a central portion 10C and outer portions 10E in the transverse direction. The outer portions 10E are external to the central portion 10C in the transverse direction. An occupancy of the first surface regions 10_1 in the central portion 10C is higher than an occupancy of the first surface regions 10_1 in each outer portion 10E. In other words, the density of the first surface regions 10_1 and the adhesive layers 12 is higher in the central portion 10C than in the outer portions 10E.

Thus, the bonding is improved in the central portion 10C than in the outer portions 10E. This suppresses expansion of the negative electrode composite layer 10 in the central portion 10C.

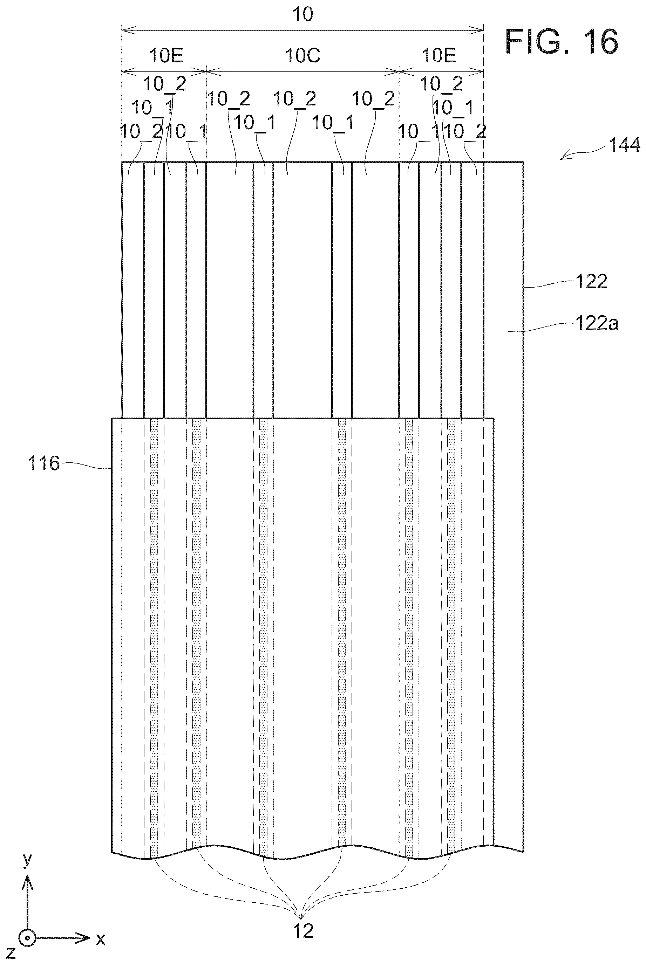

Referring to FIG. 16, a second example of the second embodiment is described. Since he depiction in FIG. 16 is similar to that in FIG. 15, description thereof is omitted. In FIG. 16, an occupancy of the first surface regions 10_1 in each outer portion 10E is higher than an occupancy of the first surface regions 10_1 in the central portion 10C. In other words, the density of the first surface regions 10_1 and the adhesive layers 12 is higher in the outer portions 10E than in the central portion 10C. Thus, the bonding is improved in the outer portions 10E than in the central portion 10C. This suppresses separation of the adhesive layers 12 in the outer portions 10E.

While specific examples of the present disclosure have been described above in detail, these examples are merely illustrative and place no limitation on the scope of the patent claims. The technology described in the patent claims also encompasses various changes and modifications to the specific examples described above. The technical elements explained in the present description or drawings provide technical utility either independently or through various combinations. The present disclosure is not limited to the combinations described at the time the claims are filed. Further, the purpose of the examples illustrated by the present description or drawings is to satisfy multiple objectives simultaneously, and satisfying any one of those objectives gives technical utility to the present disclosure.

## Claims

1. A secondary battery (1) comprising a positive electrode (112) and a negative electrode (114) facing each other with a separator (116) interposed therebetween,
wherein the negative electrode comprises:
a negative electrode current collector (122);
a negative electrode composite layer (10) disposed on the negative electrode current collector and containing graphite particles (11); and
an adhesive layer (12) disposed between a surface of the negative electrode composite layer and the separator,
wherein
the surface of the negative electrode composite layer that faces the separator comprises a first surface region (10_1) and a second surface region (10_2), and
an arithmetic mean roughness of the first surface region is smaller than an arithmetic mean roughness of the second surface region.

2. The secondary battery according to claim 1, wherein
in an XRD profile of the negative electrode composite layer, a degree of orientation is defined as an intensity ratio obtained by dividing an intensity of a (110) plane of a graphite crystal by an intensity of a (002) plane of the graphite crystal, and
the degree of orientation measured in the first surface region is smaller than the degree of orientation measured in the second surface region.

3. The secondary battery according to claim 2, wherein the degree of orientation measured in the second surface region is 0.03 or greater.

4. The secondary battery according to any one of claims 1 to 3, wherein the arithmetic mean roughness of the first surface region is 1.5 micrometers or less.

5. The secondary battery according to any one of claims 1 to 4, wherein
an orientation angle (OA) is defined as an angle formed between a layer plane of the graphite particle having a layered structure and a surface of the negative electrode current collector, and
an average orientation angle in the first surface region is smaller than an average orientation angle in the second surface region.

6. The secondary battery according to any one of claims 1 to 5, wherein the adhesive layer is disposed between the first surface region and the separator but is not disposed between the second surface region and the separator.

7. The secondary battery according to any one of claims 1 to 6, wherein
the negative electrode current collector and the separator each have an elongated sheet-like shape,
the first surface region and the second surface region each have a constant width and extend on the surface of the negative electrode composite layer in a longitudinal direction of the negative electrode current collector,
the first surface region and the second surface region are arranged adjacent to each other in a transverse direction perpendicular to the longitudinal direction,
the adhesive layer has a constant width and extends on a surface of the separator in the longitudinal direction, and
the adhesive layer adheres at least to the first surface region.

8. The secondary battery according to claim 7, wherein the width of the first surface region (W1) in the transverse direction is larger than the width of the adhesive layer (W3) in the transverse direction.

9. The secondary battery according to claim 7 or 8, wherein
the surface of the negative electrode composite layer comprises a central portion (10C) and an outer portion (10E) located external to the central portion in the transverse direction, and
an occupancy ratio of the first surface region in the central portion differs from an occupancy ratio of the first surface region in the outer portion.

10. The secondary battery according to claim 9, wherein the occupancy ratio of the first surface region is higher in the central portion than in the outer portion.

11. The secondary battery according to claim 9, wherein the occupancy ratio of the first surface region is higher in the outer portion than in the central portion.

12. A method of manufacturing a secondary battery in which a positive electrode and a negative electrode face each other with a separator interposed therebetween, the method comprising:
applying (S20) a paste containing graphite particles and a solvent onto a surface of a negative electrode current collector to form a negative electrode composite layer;
applying (S40) an external magnetic field to the negative electrode composite layer;
drying (S50) the negative electrode composite layer after the external magnetic field has been applied;
pressing (S105) a first surface region, which is a part of a surface of the negative electrode composite layer excluding a second surface region, after the drying;
forming (S105) an adhesive layer on a part of a surface of the separator corresponding to the first surface region; and
bringing (S120) the surface of the negative electrode composite layer and the surface of the separator into contact such that the adhesive layer is positioned within the first surface region.

13. The method according to claim 12, wherein
the negative electrode current collector and the separator each have an elongated sheet-like shape,
the first surface region and the second surface region each have a constant width and extend on the surface of the negative electrode composite layer in a longitudinal direction of the negative electrode current collector,
the first surface region and the second surface region are arranged adjacent to each other in a transverse direction perpendicular to the longitudinal direction, and
the adhesive layer has a constant width and extends on a surface of the separator in the longitudinal direction.

14. The method according to claim 13, wherein in the pressing of the first surface region, a roller (260) having a width corresponding to the width of the first surface region in the transverse direction is moved in the longitudinal direction with the roller being in contact with the surface of the negative electrode composite layer.

15. The method according to claim 14, wherein
the roller comprises a plurality of rollers,
in the pressing of the first surface region, the plurality of rollers arranged in the transverse direction is used, and
a distance between adjacent rollers in the transverse direction corresponds to the width of the second surface region in the transverse direction.
